# EUROPEAN PATENT SPECIFICATION

(11) **EP 4 353 102 B1**
(45) Date of publication and mention of the grant of the patent: **29.10.2025**
(21) Application number: 24161250.6
(22) Date of filing: 13.01.2022
(51) Int. Cl.: A24F 40/20, A24F 40/42

(54) **AEROSOL PROVISION SYSTEM**
AEROSOLBEREITSTELLUNGSSYSTEM
SYSTÈME DE FOURNITURE D'AÉROSOL

(30) Priority: 03.02.2021 GB 202101461
(43) Date of publication of application: 17.04.2024
(62) Divisional of application: 22700635.0
(73) Proprietor: Nicoventures Trading Limited, London WC2R 3LA (GB)
(72) Inventor: WHITE, Julian, Cambridge, CB4 0WX (GB)
(74) Representative: Dehns

(56) References cited:
- EP-A1- 3 590 369
- WO-A1-2018/189195
- WO-A1-2019/208974
- WO-A2-2020/182732
- US-A1- 2003 154 991
- US-A1- 2015 013 696
- US-A1- 2020 323 270

## Description

### Technical Field

The present invention relates to an aerosol provision system, an aerosol provision device, and an adapter for an aerosol provision device.

### Background

Smoking articles such as cigarettes, cigars and the like burn tobacco during use to create tobacco smoke. Attempts have been made to provide alternatives to these articles that burn tobacco by creating products that release compounds without burning. Examples of such products are heating devices which release compounds by heating, but not burning, the material. The material may be for example tobacco or other non-tobacco products, which may or may not contain nicotine.

WO 2020/182732 A2 discloses various configurations of heater components for aerosol provision devices. One heater component is configured to receive aerosol generating material and has a longitudinal axis. The heater component has a first length along the longitudinal axis, the aerosol generating material has a second length along the longitudinal axis, and a ratio of the first length to the second length is between about 1.03 and about 1.25. Another heater component has a mass of between about 0.1g and about 1g. A further heater component comprises an alloy comprising at least 99wt% Iron. A yet further heater component comprises carbon steel. A still further heater component defines a longitudinal axis and has a wall thickness, measured in a direction perpendicular to the longitudinal axis, of between about 0.025mm and about 2mm.

WO 2018/189195 A1 discloses an apparatus is arranged to volatilise or extract at least one component of smokable material. The apparatus includes a housing for receiving smokable material, a fluid container arranged to hold a fluid, and at least one tube arranged at least partially within the housing. The apparatus is arranged such that the tube enters smokable material or the smokable material enters the tube when said smokable material is received within the housing and such that in use, fluid from the fluid container passes through an exit aperture of the tube into said smokable material. The fluid that passes into the smokable material volatilises or extracts at least one component of the smokable material.

US 2015/013696 A1 discloses an extractor for an aerosol-generating device which is configured to receive a smoking article including an aerosol-forming substrate. The device includes a heater for heating the aerosol-forming substrate to form the aerosol. The extractor is configured to extract the smoking article received in the device, and includes a sliding receptacle configured to receive the smoking article, and a sleeve configured to receive the sliding receptacle. The sliding receptacle is slidable in the sleeve between a first position in which the substrate of the smoking article is positioned so as to be heated by the heater, and a second position in which the substrate is substantially separated from the heater. The sliding receptacle includes a support configured to support the substrate when the sliding receptacle and the smoking article are moved from the first position to the second position.

US 2003/154991 A1 discloses an electrical smoking system which includes a cigarette and an electric lighter. The cigarette includes a wrapper surrounding a tubular tobacco mat partially filled with material tobacco so as to define a filled tobacco rod portion and an unfilled tobacco rod portion. The wrapper includes an ammonium containing compound filler therein effective to reduce gaseous components of the tobacco smoke produced during smoking of the cigarette. The system includes a lighter comprising at least one heating blade and a controller adapted to control heating of the heater blade, the lighter arranged to at least partially receive the cigarette such that the heater blade heats a heating zone of the cigarette.

WO 2019/208974 A1 discloses an aerosol generation device which includes: a case; a container installed inside the case to move along the longitudinal direction of the case and which has an accommodation space for storing a cigarette; a heater which is disposed inside the case such that a front end thereof is inserted into the accommodation space of the container; an elastic support for elastically supporting the container with respect to the case; and a switch for sensing whether a cigarette is inserted and applying electricity to the heater.

US 2020/323270 A1 discloses an aerosol generating device which includes a releasing mechanism and a heating body. The releasing mechanism includes: a rotary portion connected to the aerosol generating device and which can rotate between a first and a second position. An aerosol-forming substrate and the heating body are relatively movable in a circumferential direction during movement of the rotary portion between the first and second positions. By using the releasing mechanism the ease of a user pulling out the aerosol-forming substrate from the heating body is improved.

EP 3590369 A1 discloses an electronic cigarette, which comprises a main body, a controlling member and a tobacco pot detachably mounted on the main body. The main body is provided with a receiving chamber with an opening. The tobacco pot is provided with a receiving space configured to receive tobacco products and is received at a first position in the receiving chamber when the tobacco pot is mounted on the main body. The controlling member is movably mounted on the main body and is configured to drive the tobacco pot to move, and when the controlling member drives the tobacco pot to move from the first position to the second position of the receiving chamber, the tobacco pot partially protrudes from the opening of the receiving chamber outside the receiving chamber.

### Summary

According to a first aspect of the present invention, there is provided an adapter for use with an aerosol provision system having the features of claim 1.

Also disclosed is an aerosol provision system comprising: an aerosol provision device comprising a chamber for receiving a consumable comprising aerosol-generating material, and an aerosol generator for generating aerosol from the aerosol-generating material when the consumable is located in the chamber, the chamber having a proximal end comprising an opening through which the consumable is insertable into the chamber, and a distal end comprising a tapered wall that tapers toward a central axis of the chamber with distance from the opening; and an adapter to selectively determine a maximum width of consumable insertable into the chamber via the opening.

The central axis of the chamber may extend in a direction orthogonal to a plane of the opening.

The aerosol provision device may comprise a consumable holder defining the chamber.

The adapter is connectable, for example releasably connectable, to the aerosol provision device to selectively determine a maximum width of consumable insertable into the chamber via the opening

The adapter is positionable relative to the opening to partially block the opening. The adapter may be connectable, for example releasably connectable, to the aerosol provision device to partially block the opening.

The bore may comprise a width in the region of 5.0-5.5mm.

The bore may comprise a width in the region of 6.5-7.0mm.

The chamber may comprise a main portion having a width greater than a width of the bore. The main portion may comprise a width substantially equal to a width of the opening. The main portion may extend between the proximal end and the distal end. The tapered wall and the adapter may be to support a consumable such that the consumable does not contact a wall defining the main portion. The wall defining the main portion may comprise a heater element for heating a consumable received in the chamber. The chamber may at least partially receive the consumable.

The adapter comprises a first threaded connection and the aerosol provision device may comprise a second threaded connection, the first threaded connection releasably connectable to the second threaded connection to locate the adapter relative to the aerosol provision device. The aerosol provision device may comprise a consumable holder defining the chamber, and the consumable holder may comprise the first threaded connection. The aerosol provision device may comprise a housing within which the chamber is disposed, and the housing may comprise the first threaded connection.

The adapter may comprise a material having a melting point greater than 300°C. The adapter may comprise polyether ether ketone (PEEK).

The adapter may comprise polyoxymethylene.

A wall of the chamber, for example a wall of the main portion, may comprise a material that is more heat resistant than a material of the adapter.

The aerosol provision system may comprise a plurality of adapters, each adapter to selectively determine a different maximum width of consumable insertable into the chamber via the opening. Each adapter may be to selectively determine a different maximum width of consumable insertable into the chamber via the opening when individually connected to the aerosol provision device. Each adapter may be to partially block the opening by a different degree. Each adapter may be to partially block the opening when individually connected to the aerosol provision device.

Each adapter may comprise a main body positionable relative to the opening to partially block the opening, and a bore through which the consumable is insertable into the opening, the bore formed in the main body, the bore of each adapter having a different width.

A first adapter of the plurality of adapters may comprise a bore with a width in the region of 5.0-5.5mm, for example a diameter in the region of 5.0-5.5mm.

A second adapter of the plurality of adapters may comprise a bore with a width in the region of 6.5-7.0mm, for example a diameter in the region of 6.5-7.0mm.

The aerosol provision system may comprise the consumable comprising aerosol-generating material.

The aerosol generator may comprise a heating assembly for applying heat to the consumable to generate aerosol from the aerosol-generating material when the consumable is located in the chamber. The heating assembly may comprise an induction heating assembly, for example a heating assembly comprising a magnetic field generator and a susceptor penetrable by a varying magnetic field to cause heating of the susceptor.

Also disclosed is an aerosol provision device comprising a chamber for receiving a consumable comprising aerosol-generating material, an aerosol generator for generating aerosol from the aerosol-generating material when the consumable is located in the chamber, the chamber having a proximal end comprising an opening through which the consumable is insertable into the chamber, and a distal end comprising a tapered wall that tapers toward a central axis of the chamber with distance from the opening; and a connection mechanism for connecting to an adapter to selectively determine a maximum width of consumable insertable into the chamber via the opening.

Further features and advantages of the invention will become apparent from the following description of preferred embodiments of the invention, given by way of example only, which is made with reference to the accompanying drawings.

### Brief Description of the Drawings

Figure 1 is a schematic illustration of an aerosol provision system according to an example;
Figure 2 is a schematic cross-sectional view of a portion of an aerosol provision device of the aerosol provision system of Figure 1;
Figure 3 is a schematic cross-sectional view of an example adapter according to the present invention included in the aerosol provision system of Figure 1;
Figure 4 is a schematic cross-sectional view of the aerosol provision system of Figure 1 receiving a consumable in use; and
Figure 5 is a schematic cross-sectional view of example first and second adapters according to the present invention for use in the aerosol provision system of Figure 1.

### Detailed Description

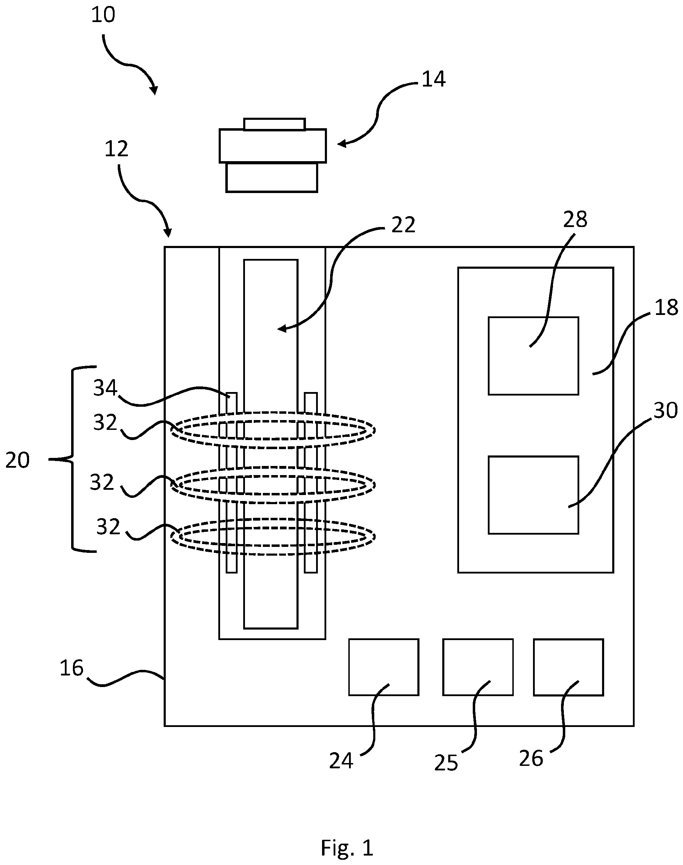

An aerosol provision system, generally designated 10, is shown schematically in Figure 1. The aerosol provision system 10 comprises an aerosol provision device 12 and an adapter 14.

The aerosol provision device 12 comprises a housing 16, a power source 18, an aerosol generator in the form of a heating assembly 20, a chamber 22, a processor 24, a computer readable memory 25, and a user-operable control element 26.

The housing 16 forms an outer cover of the aerosol provision device 12 and surrounds and houses the various components of the aerosol provision device 12.

The power source 18 supplies electrical power to the various components of the aerosol provision device 12, including, for example, the heating assembly 20. In the embodiment of Figure 1, the power source 18 comprises a battery 28 and a DC-AC converter 30 to supply AC current to the heating assembly 20. It will be appreciated that, in alternative embodiments, a heating assembly 20 may require DC current, and so the DC-AC converter 30 may be omitted or be replaced by a DC-DC converter, for example a buck or boost converter, as appropriate.

The aerosol provision device 12 may also comprise an electrical component, such as a socket/port (not shown), which can receive a cable to charge the battery 28. For example, the socket may comprise a charging port, such as a USB charging port. In some examples the socket may be used additionally or alternatively to transfer data between the aerosol provision device 12 and another device, such as a computing device. The socket may also be electrically coupled to the battery 28 via electrical tracks.

The processor 24 is in data communication with the computer readable memory 25. The processor 24 is configured to control various aspects of the operation of the aerosol provision device 12. The processor 24 controls the various aspects by executing instructions stored on the computer readable memory 25. For example, the processor 24 may control the operation of the heating assembly 20. For example, the processor may control the delivery of electrical power from the power source 18 to the heating assembly 20 by controlling various electrical components such as switches and the like (not shown in Figure 1).

The user-operable control element 26 is, for example, a button or switch, which operates the aerosol provision device 12 when pressed. For example, a user may turn on the aerosol provision device 12 by operating the user-operable control element 26, or may alter a setting of the heating assembly 20 by operating the user-operable control element 26.

The heating assembly 20 of Figure 1 is an induction heating assembly, and comprises a plurality of heating coils 32 and a susceptor 34. The plurality of heating coils 32 are individually controllable, and are spaced along the chamber 22, with the susceptor 34 embedded within the wall of the chamber 22. It will be appreciated that other locations of susceptor 34 are also envisaged, and indeed that in some embodiments the susceptor 34 may be provided in a consumable that is received within the chamber 22 in use. It will further be appreciated that in some embodiments the susceptor 34 may comprise a plurality of susceptors, for example one susceptor per heating coil 32.

A susceptor is a material that is heatable by penetration with a varying magnetic field, such as an alternating magnetic field. The susceptor may be an electrically conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically conductive and magnetic, so that the susceptor is heatable by both heating mechanisms.

To cause heating of the chamber 22, and therefore heating of a consumable received within the chamber 22, the DC-AC converter 30 supplies the plurality of heating coils 32 with AC current, such that the plurality of heating coils 32 generate a varying magnetic field. The varying magnetic field interacts with the susceptor 34 to drive eddy currents within the susceptor 34, with the flow of eddy currents causing heating of the susceptor 34, and hence the chamber 22. In such a manner a consumable received within the chamber 22 may be heated.

Whilst the heating assembly 20 described above utilises induction heating, it will be appreciated that other types of heating assembly may be used, for example other types of Joule heating assembly where current is driven along a resistive element.

It will further be appreciated that other forms of aerosol generator may be used that do not require heating. For example, in some embodiments, the aerosol generator is to cause an aerosol to be generated from the aerosol-generating material without heating. The aerosol generator may be configured to subject the aerosol-generating material to one or more of vibration, increased pressure, or electrostatic energy.

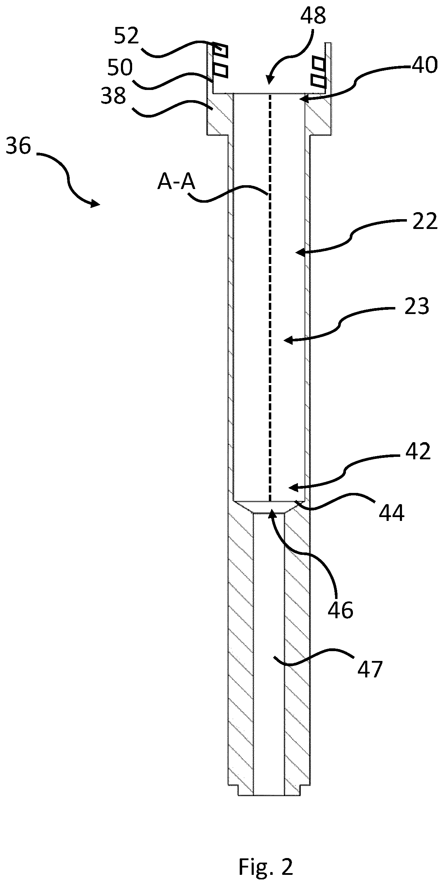

The chamber 22 is defined by a generally hollow tubular member 36, as shown in cross-section in Figure 2. The tubular member 36 comprises an elongate hollow body, with an enlarged connection portion 38. Internal walls of the tubular member 36 define the chamber 22, with the chamber 22 having a proximal end 40 and a distal end 42. The extent of the chamber 22 between the proximal end 40 and the distal end 42 may be referred to as a main portion 23 of the chamber 22. The distal end 42 comprises a tapered wall 44, which is tapered toward central axis A-A of the chamber 22. An aperture 46 in the tapered wall 44 is in fluid communication with an air inlet 47 of the aerosol provision device 12.

The proximal end 40 of the chamber 22 comprises an opening 48 through which a consumable (not shown in Figure 2) is insertable into the chamber 22. The plane of the opening 48 extends between opposing sides of an internal wall 50 of the enlarged connection portion 38, with the internal wall 50 comprising a threaded connection 52 for connecting to a threaded connection portion 54 of the adapter 14 as will be described hereafter.

In use the chamber 22 is configured to accommodate, one at a time, consumables comprising aerosol-generating material, with the heating assembly 20 being used to generate aerosol from the aerosol-generating material to be inhaled by a user. The chamber 22 may therefore be considered a heating chamber.

Aerosol-generating material is a material that is capable of generating aerosol, for example when heated, irradiated or energized in any other way. Aerosol-generating material may, for example, be in the form of a solid, liquid or gel which may or may not contain an active substance and/or flavourants. In some embodiments, the aerosol-generating material may comprise an "amorphous solid", which may alternatively be referred to as a "monolithic solid" (i.e. non-fibrous). In some embodiments, the amorphous solid may be a dried gel. The amorphous solid is a solid material that may retain some fluid, such as liquid, within it. In some embodiments, the aerosol-generating material may for example comprise from about 50wt%, 60wt% or 70wt% of amorphous solid, to about 90wt%, 95wt% or 100wt% of amorphous solid.

The aerosol-generating material may comprise one or more active substances and/or flavours, one or more aerosol-former materials, and optionally one or more other functional material.

As mentioned above, the aerosol provision device 12 receives aerosol-generating material to be heated in a consumable. A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor. Such consumables are typically elongate and substantially cylindrical in form. However, consumables may be provided which have different dimensions, for example different lengths and/or diameters.

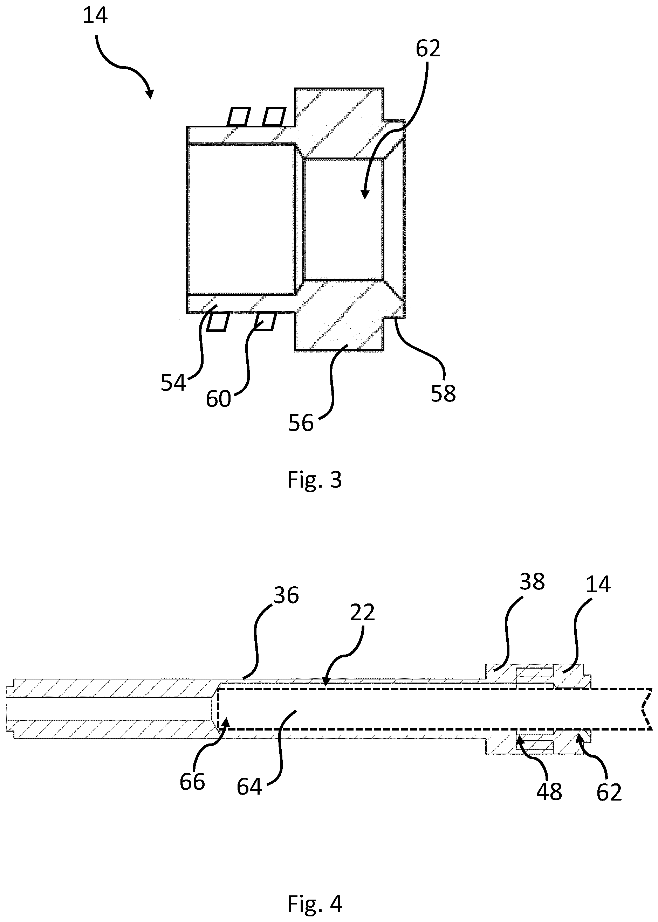

To enable the aerosol provision device 12 to be used effectively with consumables of different diameters, the aerosol provision system comprises the adapter 14, which is shown in cross-section in Figure 3.

The adapter 14 comprises a threaded connection portion 54, an abutment portion 56, and a receiving portion 58. Each of the threaded connection portion 54, the abutment portion 56, and the receiving portion 58 are generally cylindrical and hollow in form. Collectively the threaded connection portion 54, the abutment portion 56, and the receiving portion 58 define a main body of the adapter 14. The threaded connection portion 54, the abutment portion 56, and the receiving portion 58 are integrally formed, for example such that the adapter 14 comprises a monolithic structure, and may be formed via a moulding process, for example a single-shot moulding process.

An outer surface of the threaded connection portion 54 is provided with a thread 60, such that the threaded connection portion 54 defines a male connection for connection to the female connection of the enlarged connection portion 38. An outer diameter of the threaded connection portion 54 is substantially equal to an inner diameter of the enlarged connection portion 38 of the tubular member 36, such that the adapter 14 can be securely connected to the tubular member 36 via connection of the threaded connection 52 of the enlarged connection portion 38 with the threaded connection portion 54 of the adapter 14. An inner diameter of the threaded connection portion 54 is substantially equal to a width of the opening 48. An end face of the threaded connection portion 54 abuts a face of the enlarged connection portion 38 adjacent the opening 48 to prevent over-insertion of the adapter 14.

The abutment portion 56 has an outer diameter substantially corresponding to an outer diameter of the enlarged connection portion 38, such that the abutment portion 56 is able to contact an end face of the enlarged connection portion 38 to prevent over insertion of the adapter 14 into the enlarged connection portion 38.

A bore 62 is formed through the abutment portion 56 and the receiving portion 58, with a width, for example a diameter, of the bore 62 being less than a width of the opening 48. The exact dimensions of the bore 62 will depend on a consumable that the adapter 14 is intended to be used with, but a typical diameter of the bore may be in the region of 5-5.0mm, or in the region of 6.5-7.0mm. The bore 62 is provided with a tapered entry, which may facilitate insertion of a consumable through the bore 62.

An in-use configuration where the adapter 14 is connected to the tubular member 36 is shown schematically in Figure 4. The adapter 14 is connected to the enlarged connection portion 38 of the tubular member 36 by engagement of the threaded connection 52 of the enlarged connection portion 38 with the threaded connection portion 54 of the adapter 14, with the abutment portion 56 engaged with end faces of the enlarged connection portion 38. In some examples the engagement is such that the adapter 14 is located external of the housing 16, whereas in other examples the engagement may be such that the adapter 14 is located internally within the housing 16. In the latter example, the housing 16 may comprise a removable end wall to allow for insertion and removal of the adapter 14.

A consumable 64 is inserted through the bore 62, through the opening 48 and into the chamber 22. A first end 66 of the consumable 64 is in contact with the tapered wall 44, whilst a portion of the main body of the consumable spaced from the first end 66 is held within the bore 62. Thus the consumable 64 may be securely held via the bore 62 and the tapered wall 44. The tapered wall 44 and the adapter 14 may enable the aerosol provision device 12 to be used with consumables of different widths, for example different diameters, whilst securely holding the consumables.

As the bore 62 has a width, for example a diameter, less than a width of the opening 48, the adapter 14, and in particular the main body of the adapter 14, partially blocks the opening 48, and the consumable 64 is supported such that there is a gap between the wall of the chamber 22 and the consumable 64. This may inhibit direct contact of the consumable 64 with the wall of the chamber 22, which may facilitate insertion and removal of the consumable 64 from the chamber 22.

From Figure 4, it can be seen that the adapter 14 is located such that it is remote from the main portion 23 of the chamber 22, which is the region in which the susceptor 34 is located, and hence remote from an area at which the chamber 22 is heated. This may allow the adapter 14 to be formed of a material that is less heat resistant than a wall of the chamber 22, for example than the tubular member 36. In any event, and to minimise the risk of deformation of the adapter 14 in use, in some examples the adapter 14 is formed from a material having a melting point of greater than 300°C. This may ensure that the adapter 14 can withstand normal operating temperatures of the aerosol provision device 12 in use.

In some examples the adapter 14 may be formed of polyether ether ketone (PEEK). PEEK, however, may be a relatively expensive material, and so in other examples the adapter may be formed of polyoxymethylene (acetal). Forming the adapter 14 of polyoxymethylene (acetal) may also provide for easier formation of the threaded connection portion 54 than for a corresponding adapter made from PEEK.

As previously mentioned, consumables may be provided which have different dimensions, for example different lengths and/or diameters. To enable the aerosol provision device 12 to be used with further consumables with different diameters, a second adapter 68 may be provided as part of the aerosol provision system 10.

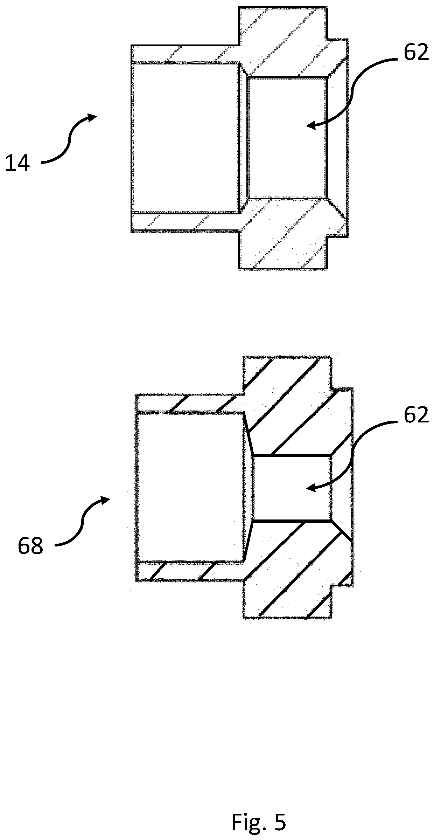

The second adapter 68 is shown in isolation with the first adapter 14 in Figure 5. The second adapter 68 has substantially the same form as the first adapter 14, and differs only in the width, i.e. the diameter, of the bore 62. As shown in Figure 5 the first adapter 14 has a bore 62 having a diameter in the region of 6.5-7.0mm, whilst the second adapter 68 has a bore 62 having a diameter in the region of 5.0-5.5mm. Thus the first 14 and second 68 adapters may partially block the opening 48 to a different degree, and allow the insertion into the opening 48 of consumables having different diameters. The tapered wall 44 may further allow the aerosol provision device 12 to accommodate consumables of different diameters.

It will be appreciated by a person skilled in the art that any number of adapters may be provided, with each adapter having a bore dimensioned to hold a consumable of a different diameter therein. It will also be appreciated that the aerosol provision device may be used with a plurality of different consumables, only some of which require the use of the adapter.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the appended claims, and that other embodiments may be utilised and modifications may be made without departing from the scope of the claimed invention.

## Claims

1. An adapter (14) adapted to be connected to an opening (48) of a chamber (22) of an aerosol provision device (12) when in use, in which the chamber (22) is adapted to receive a consumable (64) which is inserted through the opening (48), **characterised in that**
the adapter is integrally formed and comprises an abutment portion (56), a receiving portion (58), and a connection portion (54),
the abutment portion (56), receiving portion (58), and connection portion (54) are each generally cylindrical and co-axial,
the abutment portion (56) extends between the connection portion (54) and receiving portion (58),
the connection portion (54) is threaded with a thread (60), and
the thread (60) of the connection portion (54) is adapted to engage with a thread (52) associated with the chamber (22) when the adapter (14) is in use,
a bore (62) is formed through the abutment portion (56) and the receiving portion (58), the bore (62) has a width less than the width of the opening (48),
the bore (62) is provided with a tapered entry in the receiving portion (58),
the connection portion (54) defines a second bore which extends between an end of the bore (62) and an end of the connection portion remote from the abutment portion (56), the second bore is of a larger diameter than the bore (62) in the abutment portion (56), and
the bore (62) determines a maximum width of a consumable (64) that is insertable into the chamber (22) via the opening (48) when the adapter (14) is connected to the opening (48) of the chamber (22).

2. An adapter (14) as claimed in Claim 1, wherein the bore (62) comprises a width of 5.0-5.5mm.

3. An adapter (14) as claimed in Claim 1, wherein the bore comprises (62) a width of 6.5-7.0mm.

4. An adapter (14) as claimed in any of claims 1 to 3, wherein the adapter (14) comprises a first threaded connection (54), the first threaded connection (54) is adapted to be releasably connected to a second threaded connection (52) in the aerosol provision device (12).

5. An adapter (14) as claimed in any of Claims 1 to 4, wherein the adapter (14) comprises a material having a melting point greater than 300°C.

6. An adapter (14) as claimed in any of Claims 1 to 4, wherein the adapter (14) comprises one of polyoxymethylene or polyether ether ketone.

7. An adapter (14) as claimed in any of claims 1 to 6 in which the adapter (14) is a monolithic structure.

## Patentansprüche

1. Adapter (14), der dazu angepasst ist, im Gebrauch mit einer Öffnung (48) einer Kammer (22) einer Aerosolbereitstellungsvorrichtung (12) verbunden zu werden, wobei die Kammer (22) dazu angepasst ist, ein Verbrauchsmaterial (64) aufzunehmen, das durch die Öffnung (48) eingeführt wird, **dadurch gekennzeichnet, dass**
der Adapter einstückig gebildet ist und einen Anschlagabschnitt (56), einen Aufnahmeabschnitt (58) und einen Verbindungsabschnitt (54) umfasst,
der Anschlagabschnitt (56), der Aufnahmeabschnitt (58) und der Verbindungsabschnitt (54) jeweils im Allgemeinen zylinderförmig und koaxial sind,
der Anschlagabschnitt (56) sich zwischen dem Verbindungsabschnitt (54) und dem Aufnahmeabschnitt (58) erstreckt,
der Verbindungsabschnitt (54) mit einem Gewinde (60) gewunden ist, und
das Gewinde (60) des Verbindungsabschnitts (54) dazu angepasst ist, mit einem der Kammer (22) zugeordneten Gewinde (52) in Eingriff zu kommen, wenn der Adapter (14) im Gebrauch ist,
eine Bohrung (62) durch den Anschlagabschnitt (56) und den Aufnahmeabschnitt (58) gebildet ist,
die Bohrung (62) eine Breite kleiner als die Breite der Öffnung (48) aufweist,
die Bohrung (62) mit einem verjüngten Eingang im Aufnahmeabschnitt (58) bereitgestellt ist,
der Verbindungsabschnitt (54) eine zweite Bohrung definiert, die sich zwischen einem Ende der Bohrung (62) und einem Ende des Verbindungsabschnitts entfernt vom Anschlagabschnitt (56) erstreckt,
die zweite Bohrung einen größeren Durchmesser als die Bohrung (62) im Anschlagabschnitt (56) aufweist, und
die Bohrung (62) eine maximale Breite eines Verbrauchsmaterials (64) bestimmt, das über die Öffnung (48) in die Kammer (22) eingeführt werden kann, wenn der Adapter (14) mit der Öffnung (48) der Kammer (22) verbunden ist.

2. Adapter (14) nach Anspruch 1, wobei die Bohrung (62) eine Breite von 5,0-5,5 mm umfasst.

3. Adapter (14) nach Anspruch 1, wobei die Bohrung (62) eine Breite von 6,5-7,0 mm umfasst.

4. Adapter (14) nach einem der Ansprüche 1 bis 3, wobei der Adapter (14) eine erste Gewindeverbindung (54) umfasst, die erste Gewindeverbindung (54) dazu angepasst ist, lösbar mit einer zweiten Gewindeverbindung (52) in der Aerosolbereitstellungsvorrichtung (12) verbunden zu werden.

5. Adapter (14) nach einem der Ansprüche 1 bis 4, wobei der Adapter (14) ein Material umfasst, das einen Schmelzpunkt aufweist, der größer als 300 °C ist.

6. Adapter (14) nach einem der Ansprüche 1 bis 4, wobei der Adapter (14) eines von Polyoxymethylen oder Polyetheretherketon umfasst.

7. Adapter (14) nach einem der Ansprüche 1 bis 6, wobei der Adapter (14) eine monolithische Struktur ist.

## Revendications

1. Adaptateur (14) adapté de manière à être connecté à une ouverture (48) d'une chambre (22) d'un dispositif (12) de fourniture d'aérosol lorsqu'il est utilisé, dans lequel la chambre (22) est adaptée de manière à recevoir un consommable (64) qui est inséré à travers l'ouverture (48), **caractérisé en ce que**
l'adaptateur est formé en une pièce et comprend une partie de butée (56), une partie de réception (58), et une partie de connexion (54),
la partie de butée (56), la partie de réception (58) et la partie de connexion (54) sont chacune généralement cylindriques et coaxiales,
la partie de butée (56) s'étend entre la partie de connexion (54) et la partie de réception (58),
la partie de connexion (54) est filetée avec un filetage (60), et
le filetage (60) de la partie de connexion (54) est adapté pour venir en engagement avec un filetage (52) associé à la chambre (22) lorsque l'adaptateur (14) est utilisé,
un alésage (62) est formé à travers la partie de butée (56) et la partie de réception (58),
l'alésage (62) présente une largeur inférieure à la largeur de l'ouverture (48),
l'alésage (62) est prévu avec une entrée conique dans la partie de réception (58),
la partie de connexion (54) définit un second alésage qui s'étend entre une extrémité de l'alésage (62) et une extrémité de la partie de connexion éloignée de la partie de butée (56), le second alésage est d'un diamètre supérieur à l'alésage (62) dans la partie de butée (56), et
l'alésage (62) détermine une largeur maximale d'un consommable (64) qui est insérable dans la chambre (22) par l'intermédiaire de l'ouverture (48) lorsque l'adaptateur (14) est connecté à l'ouverture (48) de la chambre (22).

2. Adaptateur (14) tel que revendiqué dans la revendication 1, dans lequel l'alésage (62) comprend une largeur de 5,0-5,5 mm.

3. Adaptateur (14) tel que revendiqué dans la revendication 1, dans lequel l'alésage (62) comprend une largeur de 6,5-7,0 mm.

4. Adaptateur (14) tel que revendiqué dans l'une quelconque des revendications 1 à 3, dans lequel l'adaptateur (14) comprend une première connexion filetée (54), la première connexion filetée (54) est adaptée de manière à être connectée de manière libérable à une seconde connexion filetée (52) dans le dispositif (12) de fourniture d'aérosol.

5. Adaptateur (14) tel que revendiqué dans l'une quelconque des revendications 1 à 4, dans lequel l'adaptateur (14) comprend un matériau présentant un point de fusion supérieur à 300 °C.

6. Adaptateur (14) tel que revendiqué dans l'une quelconque des revendications 1 à 4, dans lequel l'adaptateur (14) comprend un de polyoxyméthylène ou de polyétheréthercétone.

7. Adaptateur (14) tel que revendiqué dans l'une quelconque des revendications 1 à 6 dans lequel l'adaptateur (14) est une structure monolithique.
